# EUROPEAN PATENT SPECIFICATION

(11) **EP 3 249 182 B1**
(45) Date of publication and mention of the grant of the patent: **19.08.2020**
(21) Application number: 17168342.8
(22) Date of filing: 27.04.2017
(51) Int. Cl.: F01D 25/30

(54) **RADIAL EXHAUST DIFFUSER**
RADIALER ABGASDIFFUSOR
DIFFUSEUR D'ÉCHAPPEMENT RADIAL

(30) Priority: 28.04.2016 PL 41703216
(43) Date of publication of application: 29.11.2017
(73) Proprietor: General Electric Company, Schenectady, NY 12345 (US)
(72) Inventor: JAMIOLKOWSKI, Robert, 02-256 Warsaw (PL); NANDA, Deepesh Dinesh, 560066 Bangalore (IN); WISNIEWSKI, Adam, 02-256 Warsaw (PL)
(74) Representative: BRP Renaud & Partner mbB Rechtsanwälte Patentanwälte Steuerberater

(56) References cited:
- EP-A2- 2 278 128
- WO-A1-97/04218
- JP-A- H10 131 712
- JP-A- 2014 136 995
- US-A1- 2016 076 396

## Description

### TECHNICAL FIELD

The present application and the resultant patent relate generally to gas turbine engines and more particularly relate to radial exhaust diffusers for use with gas turbine engines and the like with improved aerodynamic performance and improved component lifetime.

### BACKGROUND OF THE INVENTION

Gas turbine engines generally include an exhaust diffuser positioned downstream of the last stage of the turbine. Generally described, the exhaust diffuser converts the kinetic energy of the hot combustion gases exiting the last stage of the turbine into potential energy in the form of increase static pressure. The exhaust diffuser directs the hot combustion gasses through a casing of increasing cross-sectional area in the direction of the flow. The exhaust diffuser generally includes a number of struts mounted onto a hub and enclosed by a casing.

Radial exhaust diffusers generally include a number of turning vanes. The turning vanes may provide a smooth flow transition from an axial direction to a radial direction. The turning vanes may be supported by a number of poles positioned circumferentially about the hub or an inner barrel of the exhaust diffuser. The poles support the turning vanes and provide structural integrity and stiffness to the inner barrel. The use of the poles, however, may create pressure losses therein. Moreover, the turning vanes and the poles may be the subject of frequent failures in the field given the harsh operating conditions. This failure issue may be more severe in exhaust diffuser designs that use the poles without the turning vanes.

JP 2014 136995 and JP H10 131712 describe the use of plates or bars to support a bearing housing, the bearing plates or bars being disposed beneath the bearing housing.

### SUMMARY OF THE INVENTION

The present application and the resultant patent thus provide a radial exhaust diffuser for a gas turbine engine. The radial diffuser includes an outer barrel, an inner barrel positioned within the outer barrel, and a number of support poles supporting the inner barrel within the outer barrel. Each support pole defines a longitudinal axis extending from the inner barrel to the outer barrel. The support poles are positioned only about an inner barrel bottom half portion. The axes of the plurality of support poles are inclined at an angle with respect to an engine axis and/or relative to radial lines in a circumferential direction.

The present application and the resultant patent further provide a method of flowing exhaust gases through an exhaust diffuser. The method includes the steps of positioning an inner barrel of the exhaust diffuser within an outer barrel, supporting the inner barrel within the outer barrel by a number of support poles, each support pole defining a longitudinal axis extending from the inner barrel to the outer barrel, positioning the support poles about an inner barrel bottom half portion and an outer barrel bottom half portion such that the axes of the plurality of support poles are inclined at an angle with respect to an engine axis and/or relative to radial lines in a circumferential direction, and flowing a greater volume of the exhaust gases outside of the inner barrel bottom portion and the outer barrel bottom portion as opposed to through the inner barrel bottom portion and the outer barrel bottom portion.

The present application and the resultant patent further provide a radial exhaust diffuser for a gas turbine engine. The radial exhaust diffuser may include an outer barrel, an inner barrel positioned within the outer barrel, and eight (8) or less support poles supporting the inner barrel within the outer barrel. The support poles may be positioned only between an inner barrel bottom half portion and an outer barrel bottom half portion.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a gas turbine engine with a compressor, a combustor, a turbine, an exhaust diffuser, and a load.
Fig. 2 is a schematic diagram of a known radial exhaust diffuser that may be used with the gas turbine engine of Fig. 1.
Fig. 3 is a perspective view of a radial exhaust diffuser as may be described herein.
Fig. 4 is a side plan view of the radial exhaust diffuser of Fig. 3.
Fig. 5 is a front plan view of the radial exhaust diffuser of Fig. 3.

### DETAILED DESCRIPTION

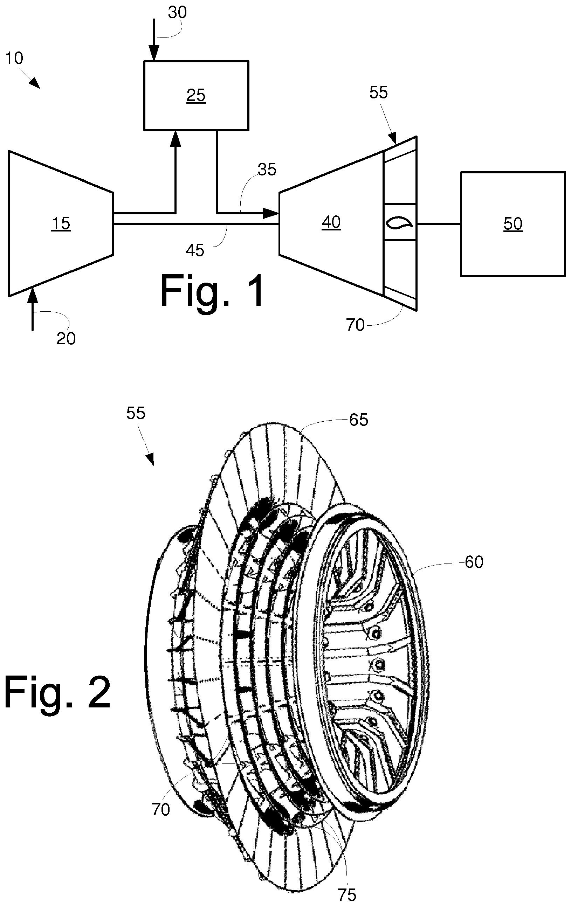

Referring now to the drawings, in which like numerals refer to like elements throughout the several views, Fig. 1 shows a schematic diagram of gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of combustors 25 configured in a circumferential array. The flow of combustion gases 35 is in turn delivered to a turbine 40. The flow of combustion gases 35 drives the turbine 40 so as to produce mechanical work. The mechanical work produced in the turbine 40 drives the compressor 15 via a shaft 45 and an external load 50 such as an electrical generator and the like. One or more air extractions 52 may extend from the compressor 15 to the turbine 40 for a flow of cooling air

The gas turbine engine 10 may use natural gas, various types of syngas, various types of liquid fuels, and/or other types of fuel and blends thereof. The gas turbine engine 10 may be any one of a number of different gas turbine engines offered by General Electric Company of Schenectady, New York, including, but not limited to, those such as a 7 or a 9 series heavy duty gas turbine engine and the like. The gas turbine engine 10 may have different configurations and may use other types of components. Other types of gas turbine engines also may be used herein. Multiple gas turbine engines, other types of turbines, and other types of power generation equipment also may be used herein together

As is shown in Figs. 1 and 2, the gas turbine engine 10 also may include an exhaust diffuser 55. The exhaust diffuser 55 may be positioned downstream of and in communication with the turbine. The exhaust diffuser 55 may include an inner barrel 60 positioned within an outer barrel 65. The inner barrel 60 may be secured within the outer barrel 65 by a number of support poles 70. The support poles 70 may be position circumferentially about the inner barrel 60. In this example, sixteen (16) support poles 70 are shown although any number may be used herein. The exhaust diffuser 55 also may include a number of turning vales 75. The turning vanes 75 may be positioned and supported on the support poles 70. The turning vanes 75 may turn the flow of the combustion gases 35 in a radial direction. In this example, five (5) turning vanes 75 are shown although any number of the turning vanes 75 may be used herein. The support poles 70 support the turning vanes 75 and provide stiffness to the inner barrel 60 and overall structural integrity. The exhaust diffuser 55 described herein is for the purpose of example only. Exhaust diffusers with different configurations and different components also may be known.

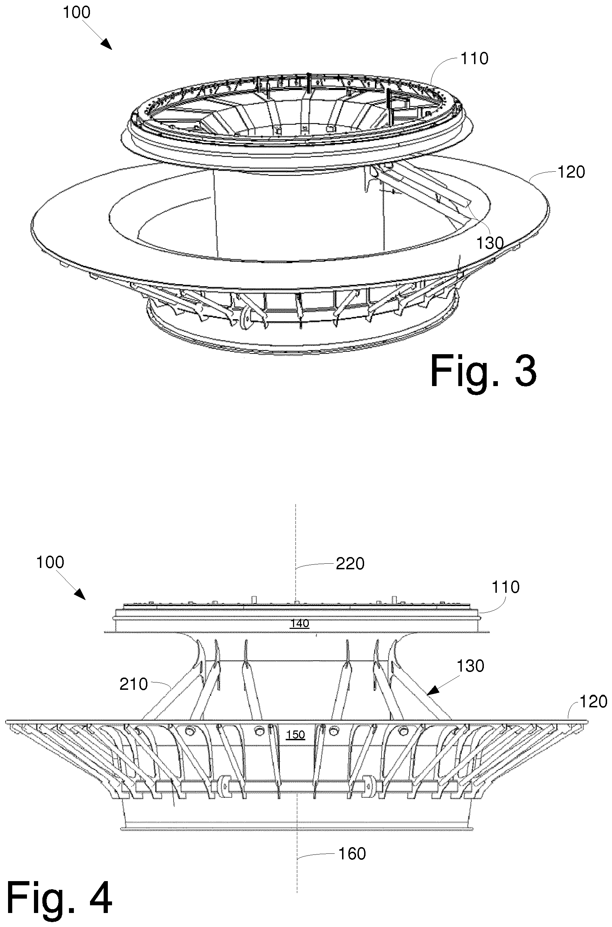

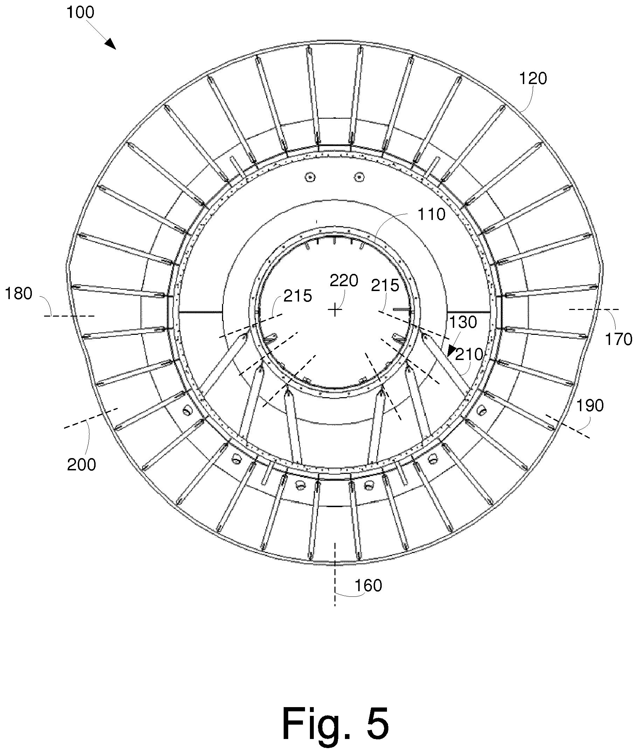

Figs. 3-5 show a radial exhaust diffuser 100 as may be described herein. The radial exhaust diffuser 100 may include an inner barrel 110 positioned within an outer barrel 120. The barrels 110, 120 may have any suitable size, shape, and configuration. The inner barrel 110 may be supported within the outer barrel 120 via a number of support poles 130. The support poles 130 may have any suitable size, shape, or configuration. As opposed to the evenly spaced support poles 70 positioned circumferentially about the inner barrel 60 described above, a limited number of the support poles 130 may be used, In this example, six (6) of the support poles 130 may be shown herein although any number may be used. The support poles 130 may be positioned mainly about an inner barrel bottom half portion 140 and an outer barrel half bottom 150. Specifically, the support poles 130 may be centered about a six o'clock position 160 of the inner barrel 110 with none of the support poles 130 extending beyond a three o'clock position 170 or a nine o'clock position 180. In this example, the support poles 130 are in fact positioned between a four o'clock position 190 and an eight o'clock position 200. Other positions may be used herein. The support poles 130 may have an inclined position 210 relative to radial lines 215 in a circumferential direction (Fig. 5). The support poles 130 also may have the inclined position relative to an engine axis 220 in an axial direction (Fig. 4). The angle of incline may vary. In order to improve vertical stiffness of the inner barrel 110, left to right symmetry of the pole arrangement may be maintained. The support poles 130 may have an overall circular shape, an oval shape, or any suitable shape. Other components and other configurations may be used herein.

Generally described, the least aerodynamically effective area of an exhaust diffuser in general is about the six o'clock position 160. At such a position, the plenum floor may block flow from the exhaust diffuser. The support poles 130 herein thus may be positioned about the six o'clock position 160 not only to provide mechanical stiffness to the inner barrel 110, but also to improve the overall aerodynamic performance as the flow blockage at the six o'clock position 160 created by the support poles 130 may have less of an impact on the overall flow. The inclined angle 210 of the support poles 130 also may limit the flow losses therethrough.

The support poles 130 of the radial exhaust diffuser 100 described herein thus provide mechanical support to the inner barrel 110 with the least number of support poles 130 possible while avoiding the use of turning vanes. Further, the positioning of the support poles 130 improves overall aerodynamic performance by removing flow blockages outside of the six o'clock position 160. Similarly, a significant improvement in component lifetime may be provided given the location of the support poles 130 outside of the main flow path. Moreover, the limited number of support poles 130 reduces overall diffuser mass as well as costs.

It should be apparent that the foregoing relates only to certain embodiments of the present application and the resultant patent. Numerous changes and modifications may be made herein by one of ordinary skill in the art without departing from the scope of the invention as defined by the following claims.

## Claims

1. A radial exhaust diffuser (100) for a gas turbine engine (10), comprising:
an outer barrel (120);
an inner barrel (110) positioned within the outer barrel (120); and
a plurality of support poles (130) supporting the inner barrel (110) within the outer barrel (120), each support pole defining a longitudinal axis extending from the inner barrel to the outer barrel;
**characterised in that** :
the plurality of support poles (130) is positioned only about an inner barrel bottom half portion (140); and
the axes of the plurality of support poles (130) are inclined at an angle (210):
with respect an engine axis (220); and/or
relative to radial lines (215) in a circumferential direction.

2. The radial exhaust diffuser (100) of claim 1, wherein the plurality of support poles (130) is positioned only about an outer barrel bottom half portion (150).

3. The radial exhaust diffuser (100) of claim 1, wherein the plurality of support poles (130) is positioned about a six o'clock position (160) of the inner barrel (110).

4. The radial exhaust diffuser (100) of claim 1, wherein the plurality of support poles (130) is positioned between a three o'clock position (170) and a nine o'clock position (180) of the inner barrel (110).

5. The radial exhaust diffuser (100) of claim 1, wherein the plurality of support poles (130) is positioned between a four o'clock position (190) and an eight o'clock position (200) of the inner barrel (110).

6. The radial exhaust diffuser (100) of any preceding claim, wherein the plurality of support poles (130) comprises ten (10) support poles (130) or less.

7. The radial exhaust diffuser (100) of any of claims 1 to 6, wherein the plurality of support poles (130) comprises eight (8) support poles (130) or less.

8. The radial exhaust diffuser (100) of any of claims 1 to 6, wherein the plurality of support poles (130) comprises six (6) support poles (130) or less.

9. The radial exhaust diffuser (100) of any preceding claim, wherein the plurality of support poles (130) comprises a circular or oval shape.

10. A method of flowing exhaust gases (35) through an exhaust diffuser (100), comprising:
positioning an inner barrel (110) of the exhaust diffuser (100) within an outer barrel (120);
supporting the inner barrel (110) within the outer barrel (120) by a plurality of support poles (130) ), each support pole defining a longitudinal axis extending from the inner barrel to the outer barrel;
positioning the plurality of support poles (130) only about an inner barrel bottom half portion (140), such that the axes of the plurality of support poles (130) are inclined at an angle (210):
with respect to an engine axis (220); and/or
relative to radial lines (215) in a circumferential direction; and
flowing a greater volume of the exhaust gases (35) outside of the inner barrel bottom portion (140) and the outer barrel bottom portion (150) as opposed to through the inner barrel bottom portion (140) and the outer barrel bottom portion (150);
wherein the plurality of support poles (130) avoids the greater volume of the exhaust gases (35).

11. The method of claim 10, wherein the supporting step comprises supporting the inner barrel (110) within the outer barrel (120) by six (6) support poles (130).

## Patentansprüche

1. Radialer Abgasdiffusor (100) für ein Gasturbinentriebwerk (10), umfassend:
einen äußeren Zylinder (120);
einen inneren Zylinder (110), der innerhalb des äußeren Zylinders (120) positioniert ist; und
eine Vielzahl von Stützstangen (130), die den inneren Zylinder (110) innerhalb des äußeren Zylinders (120) stützen, wobei jede Stützstange eine Längsachse definiert, die sich von dem inneren Zylinder zu dem äußeren Zylinder erstreckt;
**dadurch gekennzeichnet, dass:**
die Vielzahl von Stützstangen (130) nur um einen Bodenhälftenabschnitt (140) des inneren Zylinders positioniert ist und
die Achsen der Vielzahl von Stützstangen (130) um einen Winkel (210) geneigt sind:
mit Bezug auf eine Triebwerksachse (220) und/oder relativ zu radialen Linien (215) in einer Umfangsrichtung.

2. Radialer Abgasdiffusor (100) nach Anspruch 1, wobei die Vielzahl von Stützstangen (130) nur um einen Bodenhälftenabschnitt (150) des äußeren Zylinders positioniert ist.

3. Radialer Abgasdiffusor (100) nach Anspruch 1, wobei die Vielzahl von Stützstangen (130) um eine Sechs-Uhr-Position (160) des inneren Zylinders (110) positioniert ist.

4. Radialer Abgasdiffusor (100) nach Anspruch 1, wobei die Vielzahl von Stützstangen (130) zwischen einer Drei-Uhr-Position (170) und einer Neun-Uhr-Position (180) des inneren Zylinders (110) positioniert ist.

5. Radialer Abgasdiffusor (100) nach Anspruch 1, wobei die Vielzahl von Stützstangen (130) zwischen einer Vier-Uhr-Position (190) und einer Acht-Uhr-Position (200) des inneren Zylinders (110) positioniert ist.

6. Radialer Abgasdiffusor (100) nach einem der vorstehenden Ansprüche, wobei die Vielzahl von Stützstangen (130) zehn (10) Stützstangen (130) oder weniger umfasst.

7. Radialer Abgasdiffusor (100) nach einem der Ansprüche 1 bis 6, wobei die Vielzahl von Stützstangen (130) acht (8) Stützstangen (130) oder weniger umfasst.

8. Radialer Abgasdiffusor (100) nach einem der Ansprüche 1 bis 6, wobei die Vielzahl von Stützstangen (130) sechs (6) Stützstangen (130) oder weniger umfasst.

9. Radialer Abgasdiffusor (100) nach einem der vorstehenden Ansprüche, wobei die Vielzahl von Stützstangen (130) eine kreisförmige oder ovale Form umfasst.

10. Verfahren zum Strömen von Abgasen (35) durch einen Abgasdiffusor (100), umfassend:
Positionieren eines inneren Zylinders (110) des Abgasdiffusors (100) innerhalb eines äußeren Zylinders (120);
Stützen des inneren Zylinders (110) innerhalb des äußeren Zylinders (120) durch eine Vielzahl von Stützstangen (130), wobei jede Stützstange eine Längsachse definiert, die sich von dem inneren Zylinder zu dem äußeren Zylinder erstreckt;
Positionieren der Vielzahl von Stützstangen (130) nur um einen Bodenhälftenabschnitt (140) des inneren Zylinders, so dass die Achsen der Vielzahl von Stützstangen (130) um einen Winkel (210) geneigt sind:
mit Bezug auf eine Triebwerksachse (220) und/oder relativ zu radialen Linien (215) in einer Umfangsrichtung; und
Strömen eines größeren Volumens der Abgase (35) außerhalb des Bodenabschnitts (140) des inneren Zylinders und des Bodenabschnitts (150) des äußeren Zylinders im Gegensatz zu durch den Bodenabschnitt (140) des inneren Zylinders und den Bodenabschnitt (150) des äußeren Zylinders;
wobei die Vielzahl von Stützstangen (130) das größere Volumen der Abgase (35) vermeidet.

11. Verfahren nach Anspruch 10, wobei der stützende Schritt das Stützen des inneren Zylinders (110) innerhalb des äußeren Zylinders (120) durch sechs (6) Stützstangen (130) umfasst.

## Revendications

1. Diffuseur d'échappement radial (100) pour un moteur de turbine à gaz (10), comprenant :
un cylindre externe (120) ;
un cylindre interne (110) positionné à l'intérieur du cylindre externe (120) ; et
une pluralité de pôles de support (130) supportant le cylindre interne (110) à l'intérieur du cylindre externe (120), chaque pôle de support définissant un axe longitudinal s'étendant du cylindre interne au cylindre externe ;
**caractérisée en ce que** :
la pluralité de pôles de support (130) est positionnée uniquement autour de la moitié inférieure d'un cylindre interne (140) ; et
les axes de la pluralité de pôles de support (130) sont inclinés selon un angle (210) :
par rapport à un axe de moteur (220) ; et/ou
par rapport aux lignes radiales (215) dans une direction circonférentielle.

2. Diffuseur d'échappement radial (100) selon la revendication 1, dans lequel la pluralité de pôles de support (130) est positionnée uniquement autour d'une moitié inférieure de cylindre externe (150).

3. Diffuseur d'échappement radial (100) selon la revendication 1, dans lequel la pluralité de pôles de support (130) est positionnée autour d'une position d'horloge à six heures (160) du cylindre interne (110).

4. Diffuseur d'échappement radial (100) selon la revendication 1, dans lequel la pluralité de pôles de support (130) est positionnée pôles entre une position d'horloge à trois heures (170) et une position à neuf heures (180) du cylindre interne (110).

5. Diffuseur d'échappement radial (100) selon la revendication 1, dans lequel la pluralité de pôles de support (130) est positionnée entre une position d'horloge à quatre heures (190) et une position d'horloge à huit heures (200) du cylindre interne (110).

6. Diffuseur d'échappement radial (100) selon une quelconque revendication précédente, dans lequel la pluralité de pôles de support (130) comprend dix (10) pôles de support (130) ou moins.

7. Diffuseur d'échappement radial (100) selon l'une quelconque des revendications 1 à 6, dans lequel la pluralité de pôles de support (130) comprend huit (8) pôles de support (130) ou moins.

8. Diffuseur d'échappement radial (100) selon l'une quelconque des revendications 1 à 6, dans lequel la pluralité de pôles de support (130) comprend six (6) pôles de support (130) ou moins.

9. Diffuseur d'échappement radial (100) selon une quelconque revendication précédente, dans lequel la pluralité de pôles de support (130) comprend une forme circulaire ou ovale.

10. Procédé d'écoulement de gaz d'échappement (35) à travers un diffuseur d'échappement (100) comprenant :
positionner un cylindre interne (110) du diffuseur d'échappement (100) à l'intérieur d'un cylindre externe (120) ;
supporter le cylindre interne (110) à l'intérieur du cylindre externe (120) par une pluralité de pôles de support (130), chaque pôle de support définissant un axe longitudinal s'étendant du cylindre interne au cylindre externe ;
positionner la pluralité de pôles de support (130) uniquement autour d'une moitié inférieure de cylindre interne (140), de telle sorte que les axes de la pluralité de pôles de support (130) sont inclinés selon un angle (210) ;
par rapport à un axe de moteur (220) ; et/ou
par rapport aux lignes radiales (215) dans une direction circonférentielle ; et
faire s'écouler un plus grand volume des gaz d'échappement (35) à l'extérieur de la partie inférieure de cylindre interne (140) et de la partie inférieure de cylindre externe (150) par opposition à la partie inférieure de cylindre interne (140) et à la partie inférieure de cylindre externe (150) ;
dans lequel la pluralité de pôles de support (130) évite le plus grand volume des gaz d'échappement (35).

11. Procédé selon la revendication 10, dans lequel l'étape de support comprend le support du cylindre interne (110) à l'intérieur du cylindre externe (120) par six (6) pôles de support (130).
